**Europäisches Patentamt**

(19) **European Patent Office**

**Office européen des brevets**

(11) Publication number : **0 328 323 B1**

(12) # EUROPEAN PATENT SPECIFICATION

(45) Date of publication of patent specification :
**15.04.92 Bulletin 92/16**

(51) Int. Cl.⁵ : **B27K 3/15, C09D 15/00, C09D 4/02, C04B 41/48, D21H 17/19, D06M 15/263, C14C 9/00**

(21) Application number : **89301095.9**

(22) Date of filing : **03.02.89**

(54) **Penetrating treatment for porous substrates.**

(30) Priority : **12.02.88 US 155660**

(43) Date of publication of application :
**16.08.89 Bulletin 89/33**

(45) Publication of the grant of the patent :
**15.04.92 Bulletin 92/16**

(84) Designated Contracting States :
**AT BE CH DE ES FR GB IT LI LU NL SE**

(56) References cited :
**US-A- 3 425 975**
**US-A- 4 131 580**
**US-A- 4 197 225**
**US-A- 4 263 372**

(56) References cited :
**CHEMICAL ABSTRACTS, vol. 108, no. 2, 11th January 1988, page 96, abstract no. 7775p, Columbus, Ohio, US; & JP-A-62 152 802 (NIPPON OILS AND FATS CO., LTD) 07-07-1987 (Cat. D,A)**

(73) Proprietor : **ROHM AND HAAS COMPANY**
**Independence Mall West**
**Philadelphia Pennsylvania 19105 (US)**

(72) Inventor : **Larson, Donald Bruce**
**112 Belleview Way**
**Chalfont Pennsylvania 18914 (US)**

(74) Representative : **Angell, David Whilton et al**
**ROHM AND HAAS (UK) LTD. European Operations Patent Department Lennig House 2 Mason's Avenue**
**Croydon CR9 3NB (GB)**

EP 0 328 323 B1

Jouve, 18, rue Saint-Denis, 75001 PARIS

## Description

## I. BACKGROUND OF THE INVENTION

This invention is concerned with penetrating finishes, especially for wood and other porous materials.

As described in Laughnan, "Natural Wood Finishes for Exteriors of Houses", Forest Prod. J., 4(5), 343(1954), natural finishes for exterior use are either penetrating, i.e., soak into the wood and do not leave a continuous film of appreciable thickness on the surface, or are surface coatings.

This invention addresses the problems of protecting porous materials during exterior exposure. These problems have been well recognized in the literature as in J. Sell and W.C. Feist, "U.S. and European Finishes for Weather-exposed Wood -- A Comparison", Forest Prod. J., 36(4), 37 (1986):

"A main problem in wood finishing for outdoors lies in the fact that architects as well as homeowners often prefer to use fully transparent or semitransparent finishes because they like the look of the 'natural' color and texture of wood. Because these popular types of finishes (clear finishes, stains) have to transmit some visible sunlight, they contain only small amounts of pigment and may have a rather low moisture-excluding efficiency, especially those with low or negligible film thickness. Both the properties of high light transmission and low moisture exclusion are opposite to the requirements for a long-term durable finish."

Also this invention addresses the problem of reducing the large amounts of volatile solvent currently found in commercial wood treatment, both clear compositions and stains.

This invention further addresses the problem of failure by underfilm whitening, cracking and peeling of varnish topcoats over wood which is exposed outdoors, as discussed by J. Boxall et al., "The Performance of Extender-modified Clear Finishes on Exterior Timber", J. Oil Colour Chem. Assoc., 67(9), 227, (1984).

This invention also addresses the problem of reducing the amount of autoxidizable material in the compositions used in protecting porous substrates, especially wood. Drying oils such as linseed oil and materials based on drying oils such as drying oils alkyds are major components in the binders of conventional wood treatment clears and stains. Although the autoxidation of these binders is responsible for initial film formation and drying of the treatments and stains, the autoxidation continues and is responsible for the degradation of the binders; producing embrittled and hydrophillic binders which no longer protect the wood (L.A. O'Neil, FATIPEC, 225, 1970).

As described in W.G. Lloyd ("Autoxidations," in Methods in Free-Radical Chemistry, E.S. Huyser (Editor), Vol. 4, Marcel Dekker, New York, 1973), autoxidation is a type of oxidation occuring in air spontaneously under very mild conditions. The process is a free-radical chain reaction where the propagation cycle is described by Lloyd as alkyl radical addition to molecular oxygen, formation of a peroxy radical, and attack by the peroxy radical upon the substrate molecule, transferring a hydrogen atom, forming a molecule of hydroperoxide, and generating another alkyl radical to continue the kinetic chain. The rate of propagation is limited by the rate of the hydrogen abstraction step. The other important rate-limiting step described by Lloyd is termination, which is the ease with which free radicals combine or disproportionate with one another to form nonradical products.

Lloyd provides a method by which the susceptibilities to autoxidation of a wide variety of organic compounds can be compared. He uses the term oxidizibilities, which is a measured quantity equal to the quotient of the propagation rate constant divided by the square root of the termination rate constant (where the overall autoxidation rate is dependent upon the square root of the initiation rate and upon the first power of the concentration of the compound being oxidized).

Lloyd found that such data indicate that virtually any compound bearing at least one hydrogen atom bonded to a carbon atom will undergo autoxidation at moderate temperatures in the 30° to 100°C range, and that compounds capable of forming resonance-stabilized free radicals as a result of hydrogen atom abstraction (i.e., compounds bearing allylic or benzylic hydrogens and ethers possessing alpha-hydrogens) are especially susceptible to autoxidation. His data at 30°C range from $10^{-5}$ (liters/mole-sec)$^{1/2}$ for toluene to about $10^{-2}$ for methyl linoleate (the functional component of soybean oil). Even at the much higher temperature of 130°C, the oxidizibility of n-decane is only about $10^{-3}$, thus, indicating a very low value at 30°C. On the other hand, aldehydes autoxidize so fast that experiments are conveniently done at the much lower temperature of 0°C (G.E. Zaikov, J.A. Howard, and K.U. Ingold, Can. J. Chem., 47, 3017(1969)). Estimations for 30°C can be made from the data for two identical compounds in both references such that the oxidizibility of benzaldehyde is about 100 times greater than methyl linoleate and about 100,000 times faster than toluene and linear alkyl compounds like n-decane.

Thus, many organic compounds and polymers related to those compiled by Lloyd having very low oxidizibilities (less than about $10^{-4}$ (liters/mole-sec)$^{1/2}$, practically speaking, are non-oxidizing at or near room temperature (20-30°C). For example, J.A. Howard and K.U. Ingold in Can. J. Chem., 45,793(1967), report that compounds which did not contain benzylic or allylic hydrogens (e.g., t-butylbenzene, cyclohexane, n-decane, and methyl palmitate) did not oxidize under conditions of 30°C.

Linseed oil is the classic penetrating treatment for exterior wood used in the prior art. Linseed oil, containing linolenate functionality with a Lloyd oxidizibility of about 6 X $10^{-2}$, air cures by autoxidation to a crosslinked polymer, but continues to oxidize long after initial cure and yields hydrophillic, water-sensitive products.

Water repellency of the linseed oil treatment was improved by including low levels of wax as discussed by Black et al, Forest Products Natural Finish, U.S.D.A. Forest Service Research Note FPL-046 (Rev. 1979). Further, mildew resistance was improved by addition of a biocide. However, a disadvantage of this prior art treatment was that the wax interfered with subsequent painting, and, in many cases, a year or more exposure must occur before satisfactory repainting can occur.

U.S.-A-4,539,047 and 4,450,247 describe coating compositions containing very high levels of wax which can be dispersed with a special high viscosity alkyd for long-term water repellency.

U.S.-A-3,425,975 ICI (and corresponding GB-A-1,095,939) show film-forming coating compositions comprising a drying oil or other component containing unsaturated air-drying radical having two or more ethylenically unsaturated groups, a metal drier salt, and an involatile ethylenically unsaturated compound such as lauryl methacrylate, lauryl acrylate, N-butyl acrylamide, di-2-ethylhexyl fumarate, and di-2-ethylhexyl itaconate, or polyfunctional monomers such as butane-1,4-diacrylate, linear acrylate or methacrylate polyesters, in amounts up to 50% (preferably up to 20%) by weight. The object of the '975 and '939 patents is to provide "film-forming compositions which have improved air drying properties and which provide hard, through-dried films," whereas what is desired for effective protection of wood and other porous substrates is a composition which penetrates into the surface region of the wood or other substrate and does not leave a significant degree of surface film that is prone to undercutting, peeling, and cracking upon outdoor exposure as described by Boxall et al. for film-forming coatings such as varnish.

U.S.-A-4,311,624 describes high-solids coating and/or impregnating compositions containing a film-forming component and a reactive diluent which are curable at ambient conditions. The reactive diluent monomer system is a mixture of dicyclopentenyloxyalkyl esters of unsaturated acids and methacryloxyalkyl esters of drying or semi-drying oil fatty acids. The film-forming component contains autoxidizable functionality. Also included is a polyvalent metal containing salt and an optional volatile oxime stabilizer.

U.S.-A-4,071,489, describes coating or impregnating compositions of drying oil alkyds and 25-85% dicyclopentenyl acrylate or methacrylate ("DCP(M)A") optionally including less than 49% $C_{10}$-$C_{20}$ alkyl or alkenyl acrylates or methacrylates. The DCP(M)A is an oxidizing alkenyl(meth)acrylate polymerizable to a very hard polymer. The compositions also contain polyvalent metal-containing drier or siccative and an optional stabilizer.

U.S.-A-4,250,214 shows liquid monomeric DCP(M)A, as a wood impregnant which is cured by heat or radiation.

Japanese Patent Disclosure No. 62-152-802A discloses a method for producing a wood-plastic composite in which a volume of wood is impregnated by a monomer composition of $C_{10}$-$C_{30}$ alkyl or alkenyl acrylate or methacrylate or a mixture of this monomer and another copolymerizable monomer using a vacuum/pressure technique, and then polymerizing the monomer(s) using thermal polymerization, radiation with cobalt 60 rays, or addition of an initiation system of peroxide such as benzoyl peroxide with cobalt or dimethylamine. The objective of the Japanese disclosure was to improve the dimensional stability (decrease the shrinking/swelling) of the impregnated volume of wood and to do this with less polymer retention per volume of wood than conventional methods. Although the Japanese disclosure mentions the use of the $C_{10}$-$C_{30}$ acrylate or methacrylate alone, the procedure first involves dissolving the monomer in a polar solvent in addition to a non-polar solvent. Moreover, all actual examples disclosed involve monomer mixtures of stearyl methacrylate/polyethylene glycol dimethacrylate of molecular weight about 550 in ratios ranging from 50/50 to 10/90. The Japanese disclosure only copolymerizes a monomer or a mixture of monomers, with the critical component exemplified by lauryl (meth)acrylate, myristyl (meth)acrylate, pentadecyl (meth)acrylate, cetyl (meth)acrylate, stearyl (meth)acrylate, behenyl (meth)acrylate, octacosyl meth)acrylate, oleyl (meth)acrylate and palmitoleyl (meth)acrylate. US-A-4100133 discloses a coating/impregnating composition comprising a copolymer, 50-95 % of which is a monoethylenically unsaturated monomer; a polyvalent metal complex or salt; and a non-volatile monomer, at least 50 % of which is dicyclopentenyl (meth)acrylate and the remainder of which can be a $C_{10-20}$ alkyl (meth)acrylate.

In contrast, the present invention comprises a blend of two critical components - (A) non-oxidizing ($C_{10}$-$C_{22}$)-alkyl acrylate or methacrylate monomer which can produce soft homopolymer and (B) autoxidative compounds which undergo rapid free-radical chain reactions with molecular oxygen and function as a polymerization-initiator/oxygen scavenger. The (A) component of the present invention consists of much higher levels of $C_{10}$-$C_{22}$ monomers in blends with other monomers than do the useful examples of the Japanese disclosure. In addition, the present invention is not limited to industrial application techniques (although industrial techniques are also suitable), but is useful when the penetrating composition is simply brushed on the porous substrate to be protected and can provide long-term stability for full-formulated compositions. Moreover, the present invention is preferably for outdoor use where the invention provides improved durability and water repellency. Again, in distinct contrast, the Japanese reference teaches utility specifically for indoor uses for floors and walls and for artistic wood works and construction materials for which a high degree of dimensional stability is needed.

We have surprisingly found that a penetrating treatment composition, preferably in high solids form, containing high levels of long-chain alkyl acrylate or methacrylate monomer(s), together with autoxidative compound(s) which function as a polymerization initiator-oxygen scavenger, and optionally but preferably, metal drier(s) and/or volatile oxime stabilizer(s), can provide long-term water repellency to porous substrates upon exterior exposure. In addition, when a clear topcoat varnish is applied over the treated substrate according to this invention, the resultant system has better exterior durability than the clear topcoat varnish applied over untreated substrate.

This invention provides a penetrating treatment composition comprising in combination, based on total weight of (A) and (B), (A) 52.5% to 95% by weight of one or more $C_{10}$ to $C_{22}$ alkyl acrylates or methacrylates, wherein said acrylates or methacrylates each is non-oxidizing and, if homopolymerized would form a homopolymer having a glass transition temperature about 0°C or less and (B) 5% to 47.5% by weight of one or more autoxidative compounds which function as a free-radical polymerization initiator and oxygen scavenger for the reaction of (A) and (B). The compositions can optionally include further components.

The compositions of this invention are useful in the treatment of various porous substrates, such as for example, wood, paper, cardboard, fabrics, textiles, leather, plaster, brick, concrete and other cementitous substrates. The substrate-polymer composite formed after penetration and cure of this treatment composition will not continue to oxidize or cross-link after the initial cure is completed to the same degree as will formulations based solely on linseed oil or other oxidizing ("drying") oils, drying oil-modified alkyds, or high levels of oxidizing acrylate or methacrylate monomers.

The $C_{10}$ to $C_{22}$ alkyl acrylates and methacrylates of component (A) which are suitable for use in this invention are low volatility, hydrophobic, non-oxidizing monomers which can polymerize to form soft, flexible homopolymers having a glass transition temperature of about 0°C or less. The term "low volatility" means that the evaporation rate of the monomer at ambient temperature should be such that a small or no amount of said monomers evaporates before the applied formulation of (A) and (B) polymerizes. The term "hydrophobic" means that the homopolymer should be strongly water-repellent. The term "non-oxidizing" as used herein means that the monomers of component (A) and polymers therefrom do not undergo rapid free-radical chain reactions with molecular oxygen (relative to the compounds of component (B)) and that the peroxy or alkoxy free radicals of the autoxidation propagation reactions can abstract hydrogen atoms from the monomers of component (A) only with great difficulty relative to the (B) components. Preferably component (A) monomers and polymers therefrom have oxidizibilities as defined by W.C. Lloyd ("Autoxidations" in <u>Methods in Free-Radical Chemistry</u>, E.S. Huyser (Editor), Vol. 4, Marcel Dekkor, New York, 1973) of less than about $10^{-4}$ (liters/mole-sec.)$^{1/2}$. Linear $C_{10}$-$C_{22}$ alkyl methacrylates are preferred monomers for component (A) because only primary and secondary hydrogen atoms are present in these monomers.

While relatively pure $C_{10}$-$C_{22}$ alkyl acrylates and methacrylates are suitable for use in this invention, mixtures of $C_{10}$-$C_{22}$ alkyl acrylate or methacrylate monomers such as lauryl and stearyl methacrylate are also useful. Also, commercially available long-chain natural or synthetic alcohols generally are mixtures that provide mixtures of $C_{10}$-$C_{22}$ alkyl monomers when acrylate or methacrylated; such mixtures even when unpurified are useful in the present invention.

Some examples of suitable $C_{10}$-$C_{22}$ alkyl acrylates and methacrylates include, for example, decyl acrylate and methacrylate, lauryl acrylate and methacrylate, stearyl acrylate and methacrylate, lauryl-stearyl acrylate and methacrylate, dodecylpentadecyl acrylate and methacrylate, cetylicosyl acrylate and methacrylate, and the like and mixtures thereof.

Component (B) of the present invention comprises from about 5% to about 50% (based on the total weight of (A) and (B)) of one or more autoxidative compounds which function as a free-radical polymerization initiator and oxygen scavenger. These compounds contain relatively easily abstractable hydrogen atoms which allow them to undergo very rapid free-radical chain reactions with molecular oxygen. Molecular oxygen is well-known as a strong inhibitor of free-radical reactions. Despite any presence of molecular oxygen, the compounds of component (B) promote the polymerization of formulations containing component (A) when applied to wood or other porous substrate by providing free radicals to initiate the polymerization of the formulations and by reacting very rapidly with dissolved molecular oxygen, thus acting as an oxygen scavenger and allowing the polymerization of the formulations to proceed. In terms of oxidizibillities as defined by Lloyd, the useful compounds of component (B), or the subunits (the "mers") of polymers of component (B), have large values, preferably greater than about $10^{-2}$ (liters/mole-sec)$^{1/2}$. Compounds having relatively low oxidizibilities in the $10^{-2}$ to $10^{-3}$ range (linoleate or linolenate) generally are more effective in polymer form, even if the form is simply the tri-functional oil.

Compounds suitable as the autoxidative (B) components include, for example, conventional drying-oil alkyds used in coatings, wood treatments, stains, and varnishes (such as long linseed oil or long soya alkyds); drying oils (such as linseed, tung, or dehydrated castor oil); benzaldehyde and cyclic acetals (such as described in U.S. Patent No. 4,395,361, which is herein incorporated by reference); aldehydes and imines including the dialdehydes 2-oxoimidazolidine-1,3-bis(2,2-dialkyl propanal); and multifunctional conjugated diene monomers such as 1,1-bis(1'-methyl-2'-vinyl-4',6'-heptadienoxy) ethane described in U.S. Patent No. 4,021,390 (which is herein incorporated by reference).

The compositions of this invention can additionally comprise solvents or one or more optional ingredients (C) such as metal driers, stabilizers (such as, for example, hindered amine light stabilizers, volatile oximes,and conventional free-radical polymerization inhibitors), biocides (such as mildewcides, fungicides and insecticides), pigments, waxes, photoinitiators, solar screens, surfactants, leveling agents, other mono- or poly-vinylic monomers and non-polymerizable, hydrophobic oligomers and polymers. Suitable solvents include, for example, various pure and commercial mixtures of paraffinic, isoparaffinic, cycloparaffinic, and aromatic solvents, such as mineral spirits, xylene, toluene; other volatile solvents such as ketones, alcohols, glycol ethers, amides such as dimethyl formamide, chlorinated solvents (such as methylene chloride or 1,1,1-trichloroethane); and the like. The weight ratio of said solvents to the remaining components of the composition can be about 4:1 or less, preferably about 2:1 or less.

The total optional ingredients (C), excluding solvents, can conveniently be present at a weight ratio of optional ingredients (C) to components (A) and (B) of about 2:1 or less preferably about 1:1 or less.

The optional ingredients (C) may comprise one or more mono- or poly- vinylic monomers other than those included in component (A). Suitable mono- vinylic monomers for component (C) include any of the known monoethylenically-unsaturated monomers, preferably acrylates and methacrylates, and may conveniently be present at a weight ratio of mono-vinylic monomers to components (A) and (B) of about 0.35:1 or less. The mono-vinylic monomers should preferably be non-oxidizing, such as, for example, isobornyl methacrylate and the like. Mono-vinylic monomers which contain more readily abstractable hydrogen atoms or which can polymerize to homopolymers having glass transition temperatures greater than 0°C, such as tetrahydrofurfuryl methacrylate, oleyl methacrylate or dicyclopentenyloxyethyl methacrylate, may also be useful as (C) components. Poly-vinylic monomers (such as trimethylol propane trimethacrylate) may also be contained in components (C) and are most useful at a weight ratio of poly-vinylic monomer to components (A) and (B) of about 0.15:1 or less.

The optional ingredients (C) may also comprise one or more non-polymerizable, non-oxidizing, hydrophobic oligomers or polymers which cannot participate in free-radical polymerization (preferably polyisobutylene oligomers) at a convenient weight ratio of said oligomers and polymers to components (A) and (B) of about 0.3:1 or less.

The optional ingredients (C) may also comprise one or more metal driers which are conventionally used to oxidatively cure drying oil-modified alkyds under ambient conditions. Preferred metal driers include cobalt neodecanoate and blends of cobalt compounds with other drier salts such as those containing calcium, bismuth, potassium, manganese and the like. The metal driers should be present in an amount sufficient to give a weight ratio of cobalt metal to components (A) and (B), conveniently from about 0.0001:1 to about 0.002:1.

The optional ingredients (C) may also comprise one or more oxime stabilizers which may conveniently be present in a weight ratio of said stabilizers to cobalt metal from about 0.05:1 to about 20:1 and include volatile oximes, such as, for example, methyl ethyl ketone oxime, methyl butyl ketone oxime, 5-methyl-3-heptanone oxime, cyclohexanone oxime, butyraldehyde oxime and the like. The preferred stabilizer is methyl ethyl ketone oxime. The stability of the compositions of this invention may also be affected by free-radical polymerization inhibitors which are generally found in commercial acrylate and methacrylate monomers, such as hydroquinone, monomethyl ether of hydroquinone and phenothiozine.

The optional ingredients (C) may further comprise one or more pigments, such as mica, iron oxide, titanium dioxide and the like. The amount of pigments conveniently ranges from about 0.1% to about 40% based on the total weight of components (A), (B) and (C), preferably about 0.1% to about 20%. Component (C) may additionally contain about 5% or less by weight of total composition of one or more waxes, such as paraffin wax, polyethylene wax and the like. Further, component (C) may contain one or more photoinitiators (such as, for example, benzophenone, isopropylthioxanthone, and the like) at a level of about 5% or less based on the total weight of components (A), (B) and (C).

The compositions of this invention can have a very high solids content and still have application viscosities comparable to conventional penetrating treatment compositions. The compositions can be applied to a substrate by a variety of techniques such as brushing, spraying, rolling, dipping, soaking or vacuum impregnation.

A preferred application method is brushing for compositions containing the preferred cobalt metal driers and oxime stabilizers where the composition is allowed to soak into the surface of the substrate and is cured under ambient conditions to form a substrate-polymer composite. Other curing additives, application methods, and curing conditions can be used. Heat and irradiation with visible or ultraviolet rays or electron beams are examples of possible curing conditions. Examples of curing additives are thermal initiators such as benzoyl peroxide (which can include an amine or cobalt cure promoter) or a redox initiator system for ambient cure with limited pot life comprising benzoyl peroxide, benzoin and ferric acetylacetonate (described in U.S. Patent 4,009,150, which is herein incorporated by reference).

The penetrating compositions of this invention give improved durability and water repellency to porous substrates which have been treated with such compositions. For example, when used as a wood pretreatment for subsequent coating with a clear varnish or pigmented coating, the compositions of this invention impart improved exterior weatherability to the pretreated and coated wood.

The following examples are presented to further illustrate, but not limit, the invention.

The following abbreviations and terms are used in the examples.

DPMA = dodecylpentadecyl methacrylate
DPOMA = dicyclopentenyloxyethyl methacrylate
THFMA = tetrahydrofurfural methacrylate
DEB = a 50/50 mixture of 2-oxoimidazolidine -1,3-bis(2,2-dibutyl propanal and 2-oxoimidazolidine-1,3-bis(2,2-diethylpropanal

| | |
|---|---|
| IBOMA | =isobornyl methacrylate |
| TMPTMA | =trimethylol propane trimethacrylate |
| Alkyd A | =a long linseed oil alkyd(24 phthalic anhydride/64 linseed oil, acid number 14.2, 70% solids in mineral spirits) which meets specifications of a TT-R-266, Type II, Class A alkyd) |
| Alkyd B | =a very long linseed oil alkyd (16 phthalic anhydride/77 linseed oil, nominal acid number 6-10, nominally 100% solids) |
| Predispersed Pigment | =9.8% Red Iron Oxide Light (Pigment Red 101), 13.8% Dispersant Alkyd, 16.4% Odorless Mineral Spirits (CAS# 8032-32-4); available from Hilton-Davis as Product Code 10-5C-24-A122. |

All parts and percentages in the compositions are by weight based on solids unless otherwise indicated. All monomers are nominally 100% solids and since all are high-boiling monomers evaporation loss is minimal. All compositions were prepared by simple blending of the components in the compositions given in the tables of the examples. Using a premix of cobalt neodecanoate (a commercial preparation described as 6% cobalt metal) and methyl ethyl ketone oxime, the compositions were catalyzed such that they contained 0.06 percent cobalt metal (standard catalyst system) and 0.6 percent methyl ethyl ketone oxime based on total composition solids, unless otherwise indicated. For example, the composition of Sample E in Table I is 70% DPMA/30% Alkyd A at 89% solids. Since the composition is on a solids basis, 70 parts of DPMA blended with 42.9 parts of Alkyd A (as supplied at 70% solids) gave a Sample E composition having about 89% solids. The sample was catalyzed by adding 1 part cobalt neodecanoate (as supplied at 6% cobalt metal) and 0.6 parts of methyl ethyl ketone oxime, the two components being premixed. For all examples using wood as the substrate, all compositions were brush-applied over new cedar panels having a treatable surface area about 15.24 cms (6 inches) wide in the wood radial direction and 7.62 cms (3 inches) wide in the wood longitudinal direction. The examples were all based on experiments which used end-matched panels, and all original 1.22 m (4-feet) boards were selected for wood-grain uniformity. All compositions were brush-applied until the surface appeared wet. The treated panels were allowed to air-dry at least 18-36 hours before exposure to artificial or natural weathering. Artificial weathering was produced with an Atlas Weather-O-Meter using a 15-minute water spray cycle each hour together with continuous xenon-arc lamp irradiation.

Penetrating compositions do not leave significant film at the bulk surface of wood and thus conventional methods of determining cure (set-to-touch, through dry, and the like) are not applicable. A surface-cut cure test was devised to determine cure for penetrating compositions on wood: razor-blade cuts were made in the treated wood surface (four cuts about 1.9 cm (3/4 inch) long and about 0.16 cm (1/16 inch) apart), notepad paper was laid over the cuts and pressure applied to the paper directly over the cuts with a round-end stylus about 0.635 cm (1/4 inch) in diameter. If significant monomer was left uncured in the treated wood surface, the paper became translucent in the area where pressure had been applied. A rating of 5 is best (indicating no translucency) and 0 is worst.

Water repellency was measured by applying single drops of water to various places on the wood panel surface and noting (a) Spread Time -- time in minutes for the individual water drops to begin spreading out from their original dimensions and (b) Disappearance Time -- time in minutes for the individual water drops to disappear either by absorption into the wood and/or evaporation.

6

## Example I

A composition within the scope of this invention was prepared according to the formulation given in Table I below and compared to compositions falling outside the invention. Cedar panels were treated with the compositions of Table I. After a 1-day air dry, the treated panels were dry to the touch and all passed the surface-cut cure test. Table I shows the results after artificial weathering for 743 hours in a Weather-O-Meter. The composition within the scope of this invention (Sample E) exhibited dramatically-improved water resistance and resistance to cracking when compared to either untreated wood, diluted linseed oil, or compositions containing only an oxidizable hard monomer (Sample D) or an excessive amount of poly-vinylic monomer (Sample C).

Table I

| SAMPLE | COMPOSITIONS | PERCENT SOLIDS | WATER REPELLENCY | | WOOD CRACKING[a] |
| | | | SPREAD TIME | DISAPPEARANCE TIME | |
| --- | --- | --- | --- | --- | --- |
| A | Untreated Cedar | --- | <1 minute | <1 minute | very severe |
| B | Linseed Oil | 70[b] | <1 minute | <1 minute | moderate |
| C | 30% Alkyd A/70% (75 DPMA/25 TMPTMA) | 89 | <1 minute | <1 minute | slight to moderate |
| D | 80% DPOMA/20% Alkyl A | 92 | <1 minute | <1 minute | slight to moderate |
| E | 70% DPMA/30% Alkyd A | 89 | >25 minutes | >25 minutes | None |

[a] Cracking observed with stereomicroscope at 40X magnification
[b] In Mineral Spirits

## Example II

Following the procedures of Example I, a 100 % solids composition within the scope of the present invention was compared to untreated cedar panels and cedar panels treated with raw linseed oil. The panels were exposed outdoors for 8 months in southeastern Pennsylvania at a 45-degree, southern exposure. The results for water repellency are presented in Table II and demonstrate that the composition of this invention (Sample H) has dramatically improved water repellency. In addition to the water repellency test, the panels were uniformly wetted under running water for about 30 seconds and allowed to dry in a vertical position. The panel treated with the composition of this invention (Sample H) rapidly drained the water from its surface and was dry in five minutes or less; the raw linseed oil panel was blotchy when wet and needed 30-60 minutes to dry; and the untreated cedar panel was uniform when wet and was still wet after 60 minutes.

Table II

| SAMPLE | COMPOSITION | PERCENT SOLIDS | WATER REPELLENCY (DISAPPEARANCE TIME) |
|--------|-------------|----------------|----------------------------------------|
| F | Untreated Cedar | ---- | <1 minute |
| G | Raw Linseed Oil | 100 | <1 minute |
| H | 90% DPMA/10% Alkyd B | 100 | >25 minutes |

EP 0 328 323 B1

Example III

Following the procedures of Example I, binder compositions within the scope of this invention (Samples M and N) were prepared and blended with a 100% solids pigment grind of 50% red iron oxide pigment and 50% Alkyd B so that the final 100% solids stain formulation contained 5% pigment based on total binder. These compositions were compared with compositions falling outside this invention. Samples I and J contained no (A) component and oxidizing monomer for all the (C) component, Sample K was essentially linseed oil, and Sample L contained Alkyd A diluted with linseed oil. Treated panels were subjected to artificial weathering for 1497 hours. The results shown in Table III show the superior water repellency of the 100% solids stains of this invention. Note that comparative Samples K and L were too viscous to penetrate well into the wood, as evidenced by the glossy film left on the durface. Even when comparative Sample L was diluted to 50% solids with mineral spirits to improve penetration, the results after artificial weathering did not improve.

EP 0 328 323 B1

Table III

| SAMPLE | BINDER COMPOSITION | BINDER % SOLIDS | ARTIFICIAL WEATHERING RESULTS | |
|---|---|---|---|---|
| | | | GENERAL APPEARANCE | WATER REPELLENCY |
| | | | | (Disappearance Time) |
| I | 90% DPOMA/ 10% Alkyd B | 100 | Poor[a] | < 1 minute |
| J | 90% THFMA/ 10% Alkyd B | 100 | Fair[a] | < 1 minute |
| K | 95% Linseed Oil/ 5% Alkyd B | 100 | Fair to[b] Poor | < 1 minute |
| L | 95% (60% Linseed Oil/40% Alkyd A)/ 5% Alkyd B | 86 | Fair to[b] Poor | < 1 minute |
| M | 90% DPMA/ 10% Alkyd B | 100 | Fair[a] | 120 minutes |
| N | 90% (75% DPMA/25% THFMA)/10% Alkyd B | 100 | Fair[a] | 10 minutes |

[a]Initially had flat, non-glossy surface
[b]Initially had a glossy surface

Example IV

Following the procedures of Example I, cedar panels were treated with a composition within the scope of this invention (Sample R) along with comparative compositions outside this invention. After ambient curing for approximately one week, the panels were topcoated with two coats of a clear latex varnish. The panels were then air dried for approximately one week and exposed to natural exterior weathering for 8 months in southeastern Pennsylvania at a 45-degree southern exposure. The panels were evaluated for general appearance and rated on a scale from 0 (poor) to 10 (good). The results are presented in Table IV.

| Sample | Composition | General Appearance |
|---|---|---|
| O | Untreated Cedar | 1 |
| P | 95% DPOMA/5% DEB | 4 |
| Q | Linseed Oil | 5 |
| R | 95% DPMA/5% DEB | 9.5 |

Example V

Following the procedures of Example I, compositions within the scope of this invention using various long chain methacrylates were prepared and compared to compositions falling outside the invention. Cedar panels were treated with these compositions and exposed to artificial weathering for 565 hours in the Weather-O-Meter. The samples were then evaluated for water repellency and the results are given in Table V.

Table V

| SAMPLE | COMPOSITION[a] | WATER REPELLENCY | |
| --- | --- | --- | --- |
| | | SPREAD TIME | DISAPPEARANCE TIME |
| AA | 70% DPMA /30% Alkyd A | 15-30 minutes | >30 minutes |
| BB | 70% lauryl stearyl methacrylate/30% Alkyd A | >30 minutes | >30 minutes |
| CC | 70% stearyl methacrylate/30% Alkyd A | 30 minutes | >30 minutes |
| DD | 70% cetylicosyl methacrylate/30% Alkyd A | >30 minutes | >30 minutes |
| EE | 70% lauryl methacrylate/30% Alkyd A | 5-10 minutes | >30 minutes |
| Comparative | | | |
| FF | 70% IBOMA/30% Alkyd A | <1 minute | <1 minute |
| GG | 70% DPOMA/30% Alkyd A | <1 minute | <1 minute |

[a]All samples were diluted to 75% solids with mineral spirits.

Example VI

Compositions containing various amounts of dodecyl pentadecyl methacrylate and Alkyd A were prepared using the standard catalyst system at equal solids (72 percent; the value for the 10 DPMA/90 Alkyd A sample as made without dilution). The viscosities as measured at shear rate of 10,000/sec on a cone and plate viscometer ranged from >5.0 to about 0.1 poise as the level of DPMA increased in the samples. The samples were applied to non-porous glass panels so that dry-film thickness was in the 1.5 to 2.0 mils range. The films were evaluated using the standard techniques of ASTM Test Method D1640-69 5.1 (Set Time -- pass is when there is no transfer to finger after light touch) and 5.6.1 (Through-dry Time -- pass is when there is no film mar/stretching/tearing after a thumb twist on film). The results are presented in Table VI and demonstrate that compositions within the scope of this invention (Samples MM-QQ) do not effectively cure as films on a non-porous substrate.

Table VI

FILM CURING RESULTS

| SAMPLE | COMPOSITION | VISCOSITY (Poise) | 4 hours | | 16 hours | | 40 hours | |
|---|---|---|---|---|---|---|---|---|
| | | | Set Time | Through-Dry Time | Set Time | Through-Dry Time | Set Time | Through-Dry Time |
| HH | 100% Alkyd A | >5.0 | Pass | Fail | Pass | Pass | Pass | Pass |
| II | 10% DPMA/90% Alkyd A | >5.0 | Pass | Pass | Pass | Pass | Pass | Pass |
| JJ | 20% DPMA/80% Alkyd A | 4.1 | Pass | Pass | Pass | Pass | Pass | Pass |
| KK | 30% DPMA/70% Alkyd A | 2.0 | Pass | Fail | Pass | Pass | Pass | Pass |
| LL | 40% DPMA/60% Alkyd A | 0.9 | Pass | Fail | Pass | Fail | Pass | Fail |
| MM | 50% DPMA/50% Alkyd A | 0.5 | Pass | Fail | Fail | Fail | Pass | Fail |
| NN | 60% DPMA/40% Alkyd A | 0.2 | Pass | Fail | Fail | Fail | Fail | Fail |
| OO | 70% DPMA/30% Alkyd A | 0.2 | Fail | Fail | Fail | Fail | Fail | Fail |
| PP | 80% DPMA/20% Alkyd A | 0.1 | Fail | Fail | Fail | Fail | Fail | Fail |
| QQ | 90% DPMA/10% Alkyd A | 0.1 | Fail | Fail | Fail | Fail | Fail | Fail |

EP 0 328 323 B1

Example VII

Samples HH through QQ prepared in Example VI and having approximately equal solids content were applied to a porous substrate, cedar panels, following the procedures of Example I. The cure of these penetrating compositions was evaluated by the surface-cut cure test described earlier. The surface rating for all samples after a 2-day ambient air cure was 4 to 5. Viscosity plays an important role in penetration of a porous substrate such that compositions high in viscosity produce a glossy surface on the cedar panels in contrast to the relatively dull surface produced by low viscosity compositions which penetrate the cedar panels. Thus, a second set of samples were prepared having the same DPMA/Alkyd A ratio as Samples II through QQ, but adjusted to a viscosity of about 0.2 poise where necessary using mineral spirits. This second set of equal viscosity compositions was applied to cedar panels and evaluated by the surface-cut cure test and rated at 4 to 5.

The treated cedar panels were then subjected to artificial weathering in the Weather-O-Meter for 847 hous and evaluated for water repellency as in Example I. The results are given in Table VII and demonstrate that compositions within the scope of this invention effectively cure on a porous substrate and exhibit improved water repellency. Although the composition of sample QQ with the highest level of DPMA and 10% Alkyd A did not have relatively good water repellency in comparison to Samples H (Table II) and M (Table III) using 10% Alkyd B, this difference can be attributed to a difference in the autoxidation efficiencies between Alkyd A and Alkyd B

EP 0 328 323 B1

Table VII

| SAMPLE | COMPOSITION | % SOLIDS | WATER REPELLENCY DISAPPEARANCE TIME 847 Hours Exposure |
|---|---|---|---|
| | SAME SOLIDS | | |
| HH | 100% Alkyd A | 70 | < 1 minute |
| II | 10% DPMA/90% Alkyd A | 72 | < 1 minute |
| JJ | 20% DPMA/80% Alkyd A | 72 | 2-5 minutes |
| KK | 30% DPMA/70% Alkyd A | 72 | 15-30 minutes |
| LL | 40% DPMA/60% Alkyd A | 72 | 15-30 minutes |
| MM | 50% DPMA/50% Alkyd A | 72 | >60 minutes |
| NN | 60% DPMA/40% Alkyd A | 72 | 30-60 minutes |
| OO | 70% DPMA/30% Alkyd A | 72 | 60 minutes |
| PP | 80% DPMA/20% Alkyd A | 72 | >60 minutes |
| QQ | 90% DPMA/10% Alkyd A | 72 | 2-5 minutes |
| | SAME VISCOSITY | | |
| II | 10% DPMA/90% Alkyd A | 39 (2 applications) | <1 minute |
| II | 10% DPMA/90% Alkyd A | 39 | <1 minute |
| JJ | 20% DPMA/80% Alkyd A | 43 (2 applications) | 2 minutes |
| JJ | 20% DPMA/80% Alkyd A | 43 | <1 minute |
| KK | 30% DPMA/70% Alkyd A | 49 | <1 minute |
| LL | 40% DPMA/60% Alkyd A | 54 | 5-10 minutes |
| MM | 50% DPMA/50% Alkyd A | 61 | 15-30 minutes |
| NN | 60% DPMA/40% Alkyd A | 72 | 30 minutes |
| OO | 70% DPMA/30% Alkyd A | 75 | 30 minutes |
| PP | 80% DPMA/20% Alkyd A | 92 | 30-60 minutes |
| QQ | 90% DPMA/10% Alkyd A | 96 | 2-5 minutes |

All treatments are one application except where indicated.

Example VIII

A composition within the scope of this invention was prepared having 70 parts DPMA, 30 parts Alkyd A, the standard catalyst and a 75% solids content. The composition was applied to a porous cement-mineral fiber exterior siding and cured for 2 days at ambient laboratory conditions. The treated siding was subjected to artificial weathering in the Weather-O-Meter for 550 hours. The treated siding was then evaluated for water repellency and a water drop on the treated siding remained for about 30 minutes before disappearing.

Example IX

Compositions within the scope of this invention were prepared having 70 parts DPMA; 30 parts Alkyd A; 0.0, 0.5 and 1.0 parts wax, respectively (based on total weight of Alkyd A, DPMA and solvent); and a 75% solid content by dilution with mineral spirits. The wax used was a granulated paraffin wax having a melting point of 57°C. The compositions were applied to cedar panels, cured, and subjected to artificial weathering for 700 hours in the Weather-O-Meter. The results are presented in Table IX.

EP 0 328 323 B1

Table IX

| | | WATER REPELLENCY | |
| SAMPLE | AMOUNT OF WAX | SPREAD TIME | DISAPPEARANCE TIME |
|---|---|---|---|
| RR | 0 | 10-15 minutes | 15-30 minutes |
| SS | 0.5 | 15-30 minutes | >30 minutes |
| TT | 1.0 | 30 minutes | >30 minutes |

Example X

Four compositions within the scope of this invention were prepared having the four catalyst systems shown in Table X, the levels being percent based on the binder solids. All four compositions had a binder composition of 70% DPMA/29% Alkyd A, 1% Dispersant Alkyd, 5% opaque red iron oxide based on total solids, 0.6% methyl ethyl ketone oxime based on total solids, and enough mineral spirits to reduce total solids to 75%. These compositions were prepared by blending 4.8 parts Predispersed Pigment, 26.4 parts Alkyd A (70% solids), 44.7 parts DPMA, 13.3 parts mineral spirts, and a premix of 0.64 parts cobalt neodecanoate (at 6% cobalt metal) and 0.38 parts methyl ethyl ketone oxime. The stains were applied to 15.24 cm (6-inch) wide sections on three 1.2 m (4-feet) cedar boards having the same grain orientation as used in Example I and placed in the exposure conditions indicated in the Table X in about one hour after application. Sun indicates direct sunlight with panel at about 45 degrees south and shade indicates outdoor exposure but with no direct sunlight. The surface-cure results indicate that photoinitiator alone can accelerate cure in both direct sun and shade but not when kept in darkness. Also, even with no catalyst, direct sunlight can accelerate cure.

Table X

| SAMPLE | CATALYST | EXPOSURE | SURFACE-CUT TEST | |
|---|---|---|---|---|
| | | | 1 Day | 5 Days |
| UU | 0.06 Cobalt | Direct Sun | 5 | 5 |
| | | Shade | 4 | 5 |
| | | Dark | 4 | 5 |
| VV | 0.06 Cobalt | Direct Sun | 5 | 5 |
| | 1.0 ITX | Shade | 4-5 | 5 |
| | | Dark | 4-5 | 5 |
| WW | 1.0 ITX | Direct Sun | 5 | 5 |
| | | Shade | 4 | 4 |
| | | Dark | 0-1 | 0 |
| XX | No Catalyst | Direct Sun | 2 | 4 |
| | | Shade | 0 | 1-2 |
| | | Dark | 0 | 0 |

ITX = isopropylthioxanthone

Example XI

Four compositions within the scope of this invention were prepared by varying the stabilizer level for a 70% DPMA/30% Alkyd A formulation catalyzed with 0.06% cobalt metal based on solids. The 1-day surface-cut cure ratings and heat stabilities up to 30 days are given in Table XI. Separate aliquots of the compositions in sealed vials with minimum headspace were used for the 15 and 30 day heat stability tests. Although cure is not affected by the presence of the oxime stabilizer, viscosity increases during heat stability testing for the composition without oxime stabilizer, while viscosity remains constant for these compositions containing the higher level of oxime stabilizer.

## Table XI

| SAMPLE | MEK OXIME | 1-DAY SURFACE CUT CURE | VISCOSITY (STOKES) | | |
|---|---|---|---|---|---|
| | | | 1-DAY RT | 15-DAY RT/120°F | 30-DAY RT/120°F |
| AAA | 0.00 | 4-5 | 0.7-0.8 | 6.3/11.5-13 | 9.0-11.5/13-18 |
| BBB | 0.15 | 5 | 0.2-0.3 | 0.2-0.3/0.8 | 0.3-0.5/1.7-2.0 |
| CCC | 0.3 | 4-5 | 0.2-0.3 | 0.2-0.3/0.3-0.7 | 0.3-0.5/0.8 |
| DDD | 0.6 | 4-5 | 0.2-0.3 | 0.2-0.3/0.3 | 0.2-0.3/0.3 |

Gardner-Holt bubble viscosities were converted
  to stokes viscosities using Table in ASTM D 1545
RT = room temperature
MEK Oxime = methyl ethyl ketone oxime

Example XII

Two compositions within the scope of this invention (one with 70% DPMA as Component (A) and one with 52.5% DPMA and 17.5% of the non-oxidizing, hard monomer IBOMA) and two compositions falling outside of this invention (one with 35% DPMA and 35% IBOMA and one with 70% IBOMA) were prepared at 75% solids following the procedures of Example I. The test results given in Table XII for treated panels artificially weathered 407 and 880 hours show the superior water repellency for the compositions of this invention.

## Table XII

| SAMPLE | COMPOSITION | WATER REPELLENCY DISAPPEARANCE TIME | |
|---|---|---|---|
| | | 407 Hours Exposure | 880 Hours Exposure |
| EEE | 70% DPMA/30% Alkyd A | >30 minutes | >30 minutes |
| FFF | 52.5% DPMA/17.5% IBOMA/ 30% Alkyd A | >30 minutes | >30 minutes |
| GGG | 35% DPMA/35% IBOMA/ 30 Alkyd A | 10-15 minutes | <1 minute |
| HHH | 70% IBOMA/30% Alkyd A | 10-15 minutes | <1 minute |

EP 0 328 323 B1

Example XIII

A composition within the scope of this invention was prepared following the procedures of Example I. Aliquots of the initial composition having 70% DPMA/30% Alkyd A, a solids content of 89% and the standard cobalt and oxime catalyst levels were diluted with mineral spirits to 75, 50, and 39% solids. Treated cedar panels after 880 hours of artificial weathering showed water repellency disappearance time of >30 minutes for the two highest solids and 15-30 minutes for the two lower solids; two commercial wood treatments for water repellency had disappearance times of <1 minutes for the same artificial weathering exposure, with one of the commercial treatments having a time of <1 minute even after 596 hours.

Example XIV

Two stain compositions within the scope of this invention were prepared following the procedures of Examples I. One composition was a repeat preparation of Sample UU (75% solids composition with 70% DPMA/30% (Alkyd A + dispersant alkyd), 5% opaque red iron oxide, and cobalt/oxime catalyst). The other stain composition, also at 75% solids, had part of the DPMA in the initial composition replaced with a non-oxidizing (C) component, polyisobutylene (PIB) oligomer, to give the composition 50 DPMA/20 PIB/30 Alkyd A. After 1100 hours artificial weathering of treated cedar panels, both stain compositions had good appearance and water repellency disappearance times of 60 minutes or greater.

## Claims

1. A penetrating composition for treatment of porous substrates comprising in combination, based on total weight of (A) and (B),
   (A) 52.5% to 95% by weight of one or more ($C_{10}$ to $C_{22}$)-alkyl acrylate(s) or methacrylate(s), wherein each of said acrylate(s) or methacrylate(s) is non-oxidizing and, if homopolymerized, would form homopolymer having a glass transition temperature of about 0°C or less, and
   (B) 5% to 47.5% by weight of one or more autoxidative compound(s) which function as a free-radical polymerization initiator and oxygen scavenger during the reaction of components (A) and (B).

2. A composition according to claim 1 wherein the composition comprises about 60.0% or more by weight of one or more($C_{10}$-$C_{22}$)-alkyl acrylate(s) or methacrylate(s).

3. A composition according to claim 1 wherein the composition comprises about 70.0% or more by weight of one or more ($C_{10}$-$C_{22}$)-alkyl acrylate(s) or methacrylate(s).

4. A composition according to any one of claims 1 to 3 additionally comprising one or more solvent(s) wherein the weight ratio of said solvent(s) to components (A) and (B) is about 4:1 or less, preferably about 1:1 or less.

5. A composition according to any one of claims 1 to 4 additionally comprising (C) one or more of the following ingredients : metal drier; oxime stabllizer; hindered amine light stabilizer; solar screen; biocide; pigment; wax; photoinitiator; surfactant; leveling agent; non-oxidizing, non-polymerizable, hydrophobic oligomer and/or polymer; other mono- or poly-vinylic monomer; wherein the weight ratio of said ingredient (C) to components (A) plus (B) is about 2:1 or less, preferably about 1:1 or less.

6. A composition according to claim 5 containing (a) said other mono-vinylic monomers in a weight ratio to components (A) plus (B) of about 0.35:1 or less, and/or (b) said other poly-vinylic monomers in a weight ratio to components (A) plus (B) of about 0.15:1 or less, and/or (c) one or more solvent(s) in a weight ratio of said solvents to components (A) plus (B) plus (C) of about 4:1 or less, preferably about 2:1 or less, and/or (d), as metal drier, one or more cobalt compounds in an amount sufficient to give a weight ratio of cobalt metal to components (A) plus (B) from about 0.00001:1 to about 0.002:1, and/or (e), as stabilizer, one or more volatile oximes, preferably methyl ethyl ketone oxime in a weight ratio (when (d) is also present), of stabilizer to cobalt metal from about 0.05:1 to about 20:1, and/or (f) pigment in an amount of from about 0.1% to about 40%, preferably 0.1% to about 20%, of the total weight of the composition and/or (g) wax in an amount of about 5% or less of the total weight of the composition, and/or (h) photoinitiator in an amount of about 5% or less based on the total weight of the composition, and/or (i), as said oligomer or polymer, poly-isobutylene in a weight ratio to components (A) plus (B) of about 0.3:1 or less.

7. A composition according to any preceding claim wherein (A) comprises lauryl methacrylate, dodecylpentadecyl methacrylate, stearyl methacrylate, lauryl stearyl methacrylate, and/or cetyleicosyl methacrylate.

8. A composition according to any preceding claim wherein (B) comprises drying oil(s), drying oil alkyd resin(s), dialdehyde(s), difunctional conjugated diene(s), and/or cyclic acetal(s).

9. A composition according to any preceding claim wherein said porous substrate is wood, paper, cardboard, plaster, leather, fabric, textile, brick, concrete or another cementitious substrate.

10. A method of treating a porous substrate to improve water repellency and durability comprising applying a composition according to any preceding claim to said substrate, allowing said composition to penetrate into the surface of said substrate, and curing said composition, or allowing it to cure, to form a substrate-polymer composite at or near the surface of said substrate.

11. A method according to claim 10 further including coating the resultant treated substrate with a clear varnish or pigmented coating.

12. A method of claim 10 or 11 wherein said composition is cured under heat, radiation or ambient conditions.


**Patentansprüche**

1. Durchdringungsmittel zur Behandlung poröser Substrate, umfassend in Kombination, basierend auf dem Gesamtgewicht von (A) und (B),

(A) 52,5 bis 95 Gew.-% eines oder mehrerer ($C_{10}$-$C_{22}$)-Alkylacrylate oder Methacrylate, worin jedes der Acrylate oder Methacrylate nicht-oxidierend ist und, wenn es homopolymerisiert ist, ein Homopolymer mit einer Glasumwandlungstemperatur von etwa 0°C oder weniger ausbildet, und

(B) 5 bis 47,5 Gew.-% einer oder mehrerer autooxidativer Verbindungen, die als Freiradikal-Polymerisations-starter und Sauerstoff-Fänger während der Umsetzung der Komponenten (A) und (B) fungieren.

2. mittel nach Anspruch 1, umfassend etwa 60,0 Gew.-% oder mehr eines oder mehrerer ($C_{10}$-$C_{22}$)-Alkylacrylate oder Methacrylate.

3. Mittel nach Anspruch 1, umfassend etwa 70,0 Gew.-% oder mehr eines oder mehrerer ($C_{10}$-$C_{22}$)-Alkylacrylate oder Methacrylate.

4. mittel nach einem der Ansprüche 1 bis 3, enthaltend zusätzlich ein oder mehrere Lösungsmittel, in dem das Gewichtsverhältnis der Lösungsmittel zu den Komponenten (A) und (B) etwa 4:1 oder weniger, vorzugsweise etwa 1:1 oder weniger beträgt.

5. Mittel nach einem der Ansprüche 1 bis 4, enthaltend zusätzlich (C) ein oder mehrere der folgenden Bestandteile: Metalltrockner, Oximstabilisator, einen gehemmten Amin-Lichtstabilisator, Solarsieb, Biocid, Pigment, Wachs, Fotoinitiator, Tensid, Egalisiermittel, ein nicht-oxidierendes, nicht-polymerisierbares, hydrophobes Oligomer und/oder Polymer, ein weiteres Mono- oder Polyvinyl-Monomer, in dem das Gewichtsverhältnis des Bestandteiles (C) zu den Komponenten (A) und (B) etwa 2:1 oder weniger, vorzugsweise etwa 1:1 oder weniger beträgt.

6. Mittel nach Anspruch 5, enthaltend (a) die weiteren Monovinyl-Monomere in einem Gewichtsverhätnis zu den Komponenten (A) und (B) von etwa 0,35:1 oder weniger, und/oder (b) die weiteren Polyvinyl-Monomere in einem Gewichtsverhältnis zu den Komponenten (a) und (B) von etwa 0,15:1 oder weniger, und/oder (c) ein oder mehrere Lösungsmittel in einem Gewichtsverhältnis der Lösungsmittel zu den Komponenten (a) und (B) und (C) von etwa 4:1 oder weniger, vorzugsweise etwa 2:1 oder weniger, und/oder (d) als Metalltrockner ein oder mehrere Kobalt-Verbindungen in einer menge, die ausreichend ist, ein Gewischtsverhältnis des Kobaltmetalles zu den Komponenten (A) und (B) von etwa 0,00001:1 bis etwa 0,002:1 zu erreichen, und/oder (e) als Stabilisator ein oder mehrere flüchtige Oxime, vorzugsweise Methylethylketonoxim in einem Gewichtsverhältnis (wenn (d) ebenfalls vorliegt) des Stabilisators zu dem Kobaltmetall von etwa 0,05:1 bis etwa 20:1, und/oder (f) ein Pigment in einer Menge von etwa 0,1 bis etwa 40 %, vorzugsweise 0,1 bis etwa 20 % des Gesamtgewichts des Mittels, und/oder (g) ein Wachs in einer Menge von etwa 5 % oder weniger des Gesamtgewichtes des Miteels, und/oder (h) einen Fotoinitiator in einer Menge von etwa 5 % oder weniger, basierend auf dem Gesamtgewicht des Miteels, und/oder (i) als Oligomer oder Polymer Polyisobutylen in einem Gewichtsverhältnis zu den Komponenten (A) und (B) von etwa 0,3:1 oder weniger.

7. Mittel nach einem der vorhergehenden Ansprüche, in dem (A) Laurylmethacrylat, Dodecylpentadecylmethacrylat, Stearylmethacrylat, Laurylstearylmethacrylat und/oder Cetylicosylmethacrylat umfaßt.

8. Mitel nach einem der vorhergehenden Ansprüche, in dem (B) Trockenöl(e), Trockenöl-Alkylharz(e), Dialdehyd(e), difunktionale(s) konjugierte(s) Dien(e)und/oder zyklische(s) Acetal(e) umfaßt.

9. Mittel nach einem der vorhergehenden Ansprüche, in dem das poröse Substrat Holz, Papier, Karton, Gips, Leder, Gewebe, Textilien, Ziegel, Beton oder ein anderes Zementsubstrat ist.

10. Verfahren zur Behandlung eines porösen Substrates zur Verbesserung der Wasserabstoßung und der Festigkeit, bei dem man ein Mittel nach einem der vorhergehenden Ansprüche dem Substrat verabreicht, das Mittel durch die Oberfläche des Substrates hindurchdringen läßt und das Mittel zur Ausbildung eines Substrat-Polymer-Verbundes an oder hahe der Oberfläche des Substrates aushärtet oder aushärten läßt.

11. Verfahren nach Anspruch 10, umfassend ferner das Überziehen des erhaltenen, behandelten Substrates mit einem klaren Lack oder einem gefärbten Überzug.

12. Verfahren nach Anspruch 10 oder 11, in dem das Mittel unter Hitze-, Bestrahlungs- oder Umgebungsbedingungen ausgehärtet wird.

## Revendications

1. Composition pénétrante pour traiter des substrats poreux, la composition comprenant en combinaison , sur la base du poids total de (A) et de (B) :

(A) 52,5 % à 95 % en poids d'un ou plusieurs acrylate(s) ou méthacrylate(s) d'alkyle(s) (en $C_{10}$ à $C_{22}$) , chacun dudit ou desdits acrylate(s) ou méthacrylate(s) étant non oxydant et,s'il était homopolymérisé, il formerait un homopolymère ayant une température de transition vitreuse égale ou inférieure à 0°C environ, et

(B) 5 % à 47,5 % en poids d'un ou plusieurs composé(s) auto-oxydant(s) , jouant le rôle d'un amorceur de polymérisation radicalaire et d'agent de fixation de l'oxygène pendant la réaction des composants (A) et (B) .

2. Composition selon la revendication 1 , dans laquelle la composition comprend environ 60,0 % ,ou plus,en poids,d'un ou plusieurs acrylate(s) ou méthacrylate(s) d'alkyle(s) en $C_{10}$-$C_{22}$ .

3. Composition selon la revendication 1 , dans laquelle la composition comprend environ 70,0 % ou plus,en poids , d'un ou plusieurs acrylate(s) ou méthacrylate(s) d'alkyle(s) en $C_{10}$-$C_{22}$ .

4. Composition selon l'une quelconque ou plusieurs des revendications 1 à 3 , comprenant en outre un ou plusieurs solvants , dans laquelle le rapport pondéral entre le(s)dit(s) solvant(s) et les composants A et B est égal ou inférieur à 4:1 ,de préférence égal ou inférieur à environ 1:1 .

5. Composition selon l'une quelconque des revendications 1 à 4, comprenant en outre (C) un ou plusieurs des ingrédients suivants : un siccatif métallique ; oxime stabilisante ; stabilisant à l'égard de la lumière ,à base d'une amine présentant de l'empêchement stérique ; un écran solaire ; un biocide ; un pigment ; de la cire ; un photoamorceur ; un tensio-actif ; un agent de nivellement ou d'égalisation ; un oligomère et/ou polymère hydrophobe , non-oxydant , non polymérisable ; un autre monomère mono- ou poly-vinylique ; le rapport pondéral entre ledit ingrédient (C) et les composants (A) plus (B) étant égal ou inférieur à environ 2:1 ,de préférence égal ou inférieur à 1:1 .

6. Composition selon la revendication 5 , contenant (a) lesdits autres monomères mono-vinyliques selon un rapport pondéral avec les compsants (A) plus (B) égal ou inférieur à environ 0,35:1 , et/ou (b)lesdits autres monomères poly-vinyl iques selon un rapport pondéral avec les composants (A) plus (B) égal ou inférieur à environ 0,15 :1 , et/ou un ou plusieurs solvant(s) selon un rapport pondéral entre lesdits solvants et les composants (A) plus (B) plus (C) égal ou inférieur à environ 4:1, de préférence égal ou inférieur à environ 2:1 , et/ou (d) ,comme siccatif métallique , un ou plusieurs composés du cobalt en une quantité suffisante pour donner entre le métal cobalt et les composants (A) plus (B) un rapport pondéral d' environ 0,00001 : 1 à environ 0,002 : 1 , et/ou (e), comme stabilisant , une ou plusieurs oximes volatilesde préférence l'oxide de la méthyl éthyl cétone selon un rapport pondéral ( lorsque (d) est également présent) du stabilisant au métal cobalt d'environ 0,05: 1 à environ 20:1 , et/ou (f) du pigment en une quantité d'environ 0,1 % à environ 40 % , de préférence 0,1 % à environ 20 % ,du poids total de la composition et/ou (g) de la cire en une quantité égale ou inférieure à environ 5 % du poids total de la composition , et/ou (h) un photo-amorceur (présent) en une quantité égale ou inférieure à 5 % environ sur la base du poids total de la composition , et/ou (i) à titre dudit oligomère ou polymère , du poly-isobutylène, en un rapport pondéral,par rapport aux composants (A) plus (B ,égal ou inférieur à environ 0,3 : 1 .

7. Composition selon l'une quelconque des revendications précédentes , dans laquelle (A) comprend du méthacrylate de lauryle , du méthaxrylate de dodécylpentadécyle , du méthacrylate de stéaryle ,du méthacrylate de lauryle stéaryle ,et/ou du méthacrylate de cétyléicosyle .

8. Composition selon l'une quelconque des revendications précédentes , dans laquelle (B) comprend une ou des huile(s) siccative(s) , une ou plusieurs résine(s) alkyde(s) comme huile(s) siccative(s), un ou des dialdéhyde(s) , un ou des diène(s) difonctionnel(s) conjugués, et/ou un ou des acétal(s) cyclique(s) .

9. Composition selon l'une quelconque des revendications précédentes, dans le cas de laquelle ledit substrat poreux est du bois , du papier , du carton , du plâtre , du cuir , une étoffe , une matière textile , de la brique , du béton ou un autre substrat cimentaire .

10. Procédé pour traiter un substrat poreux afin d'en améliorer le pouvoir de répulsion de l'eau et la durabilité , comprenant l'application d'une composition selon l'une quelconque des revendications précédentes audit substrat , le fait de laisser ladite composition pénétrer dans ladite surface dudit substrat, et le durcissement de ladite composition,ou le fait de la laisser durcir , pour former un composite substrat-polymère à la surface ou près de la surface dudit substrat .

11. Procédé selon la revendication 10, comprenant en outre le revêtement du substrat traité résultant , par un vernis transparent ou par un revêtement pigmenté .

12. procédé selon la revendication 10 ou 11 , dans lequel on fait durcir ladite composition sous l'effet de la chaleur ,d'un rayonnement ou dans les conditions ambiantes .